Europäisches Patentamt

European Patent Office

Office européen des brevets

(11) Veröffentlichungsnummer: **0 207 284 B1**

(12) **EUROPÄISCHE PATENTSCHRIFT**

(45) Veröffentlichungstag der Patentschrift: **18.09.91**

(21) Anmeldenummer: **86107105.8**

(22) Anmeldetag: **26.05.86**

(51) Int. Cl.⁵: **H03L 7/00**, G01B 7/00

(54) Verfahren zur Synchronisierung von Rechtecksignalen.

(30) Priorität: **02.07.85 DE 3523551**

(43) Veröffentlichungstag der Anmeldung:
**07.01.87 Patentblatt 87/02**

(45) Bekanntmachung des Hinweises auf die
Patenterteilung:
**18.09.91 Patentblatt 91/38**

(84) Benannte Vertragsstaaten:
**AT CH DE FR GB IT LI NL SE**

(56) Entgegenhaltungen:
**CH-A- 407 569**
**US-A- 3 831 170**

**PATENT ABSTRACTS OF JAPAN, unexamined applications, Sektion E, Vol. 8, No. 226,
17. Oktober 1984 THE PATENT OFFICE JAPA-
NESE GOVERNMENT Seite 1 E 272**

(73) Patentinhaber: **Dr. Johannes Heidenhain
GmbH
Dr.-Johannes-Heidenhain-Strasse 5 Postfach
1260
W-8225 Traunreut(DE)**

(72) Erfinder: **Schwefel, Ernst, Dipl.-Phys.
Reichenbergweg 2
W-8225 Traunreut(DE)**
Erfinder: **Huber, Martin, Dipl.-Ing.
Laufing 2
W-8261 Asten(DE)**
Erfinder: **Zimmermann, Alois, Dipl.-Ing.
Moosstrasse 5
W-8221 Nussdorf-Sondermoning(DE)**

## Beschreibung

Die Erfindung bezieht sich auf ein Verfahren gemäß dem Oberbegriff des Anspruchs 1 und auf Schaltungsanordnungen zur Durchführung des Verfahrens.

Bei inkrementalen Längen- oder Winkelmeßeinrichtungen gehört es zum Stand der Technik, daß mit Hilfe einer entsprechenden Abtastbaueinheit durch Abtasten einer gitterartigen inkrementalen Meßteilung periodische Analogsignale erzeugt werden. Zur Erkennung der Bewegungsrichtung und zur Vermeidung von Symmetriefehlern der Signale erfolgt die Abtastung mit vier Abtastfeldern, die in Meßrichtung um ein Viertel der Gitterteilungsperiode zueinander versetzt sind.

Da für die meisten Anwendungsfälle die Auflösung entsprechend der Gitterteilungsperiode der Meßteilung nicht ausreichend ist, hat es bereits eine Vielzahl von Vorschlägen gegeben, die Abtastsignale zu unterteilen.

So ist beispielsweise aus der CH-PS 407 569 eine Unterteilungsschaltung bekannt, bei der mit Hilfe einer Vielzahl von Triggern die Abtastsignale unterteilt und so vervielfacht werden. Die in dieser Druckschrift beschriebene Schaltung bietet jedoch keine Gewähr dafür, daß bei entsprechend feiner Unterteilung die getriggerten Signale hinsichtlich ihrer Reihenfolge und ihres Flankenabstandes exakt synchronisiert sind. In Abhängigkeit vom Grad der Unterteilung, von der Meßgeschwindigkeit, von Störeinflüssen elektrischer und mechanischer Art (Störimpulse, Erschütterungen) und dergleichen kann es bei der inkrementalen Auswertung der getriggerten Rechtecksignale zu Fehlzählungen kommen.

Es können zu geringe Flankenabstände, Überschneidungen oder unzulässige Signalzustände bzw. Signalfolgen der Triggersignale auftreten.

Während des Meßbetriebes sind Fehlzählungen nicht erkennbar, da die letzten Stellen der Anzeige in der Auswertebaueinheit wegen des schnellen Wechsels ihres Anzeigewertes nicht ablesbar sind. Kommt die Meßeinrichtung jedoch zum Stillstand, und ist dann das Meßergebnis ablesbar, so muß gewährleistet sein, daß alle Inkremente bzw. alle daraus durch Unterteilung gewonnenen Rechtecksignale wirklich gezählt worden sind. Die Summe, oder in negativer Meßrichtung die Differenz aller überfahrenen Inkremente muß exakt dem Anzeigewert entsprechen, da sie das Maß für den zurückgelegten Weg darstellen.

Wenn beispielsweise Rechtecksignale, die durch Unterteilung aus den abgetasteten Signalen gewonnen wurden, einen so geringen Flankenabstand haben, daß eine sichere Zählung nicht möglich ist, so werden nicht alle Rechtecksignale gezählt, und in der Auswerteeinrichtung wird ein geringeres Meßergebnis angezeigt, als von der Meßeinrichtung tatsächlich abgefahren worden ist.

Zu ähnlichen, falschen Meßergebnissen führen die weiteren, oben aufgeführten fehlerhaften Signalzustände.

Der Erfindung liegt daher die Aufgabe zugrunde, ein Verfahren und Schaltungsanordnungen zur Durchführung des Verfahrens anzugeben, die die vorgenannten Nachteile nicht aufweisen, und die gewährleisten, daß die getriggerten Rechtecksignale zwangsweise synchronisiert werden, so daß zu geringe Flankenabstände der aufeinanderfolgenden Rechtecksignale und fehlerhafte Übergangszustände korrigiert werden.

Diese Aufgabe wird durch das im Anspruch 1 angegebene Verfahren und die im Anspruch 2 angegebene Schaltungsanordnung zur Durchführung des Verfahrens gelöst.

Die Unteransprüche geben besonders vorteilhafte Ausgestaltungen der Schaltungsanordnung an.

Die wesentlichen Vorteile des erfindungsgemäßen Verfahrens und der zugehörigen Schaltung liegen darin, daß die korrekte Schaltreihenfolge der Rechtecksignale erzwungen wird, indem die Schaltzustände der benachbarten Rechtecksignale in die Freigabeüberprüfung für das momentan anliegende Rechtecksignal mit einbezogen werden.

Mit Hilfe von Ausführungsbeispielen soll die Erfindung anhand der Zeichnungen noch näher erläutert werden.

Es zeigt

Fig. 1   ein System-Schaltbild einer Längenmeßeinrichtung mit Auswerteeinrichtung;

Fig. 2   ein Signaldiagramm von Rechtecksignalfolgen;

Fig. 3   ein abstrahiertes Blockschaltbild zur Signalsynchronisierung;

Fig. 4   ein detailliertes Blockschaltbild zur Signalsynchronisierung.

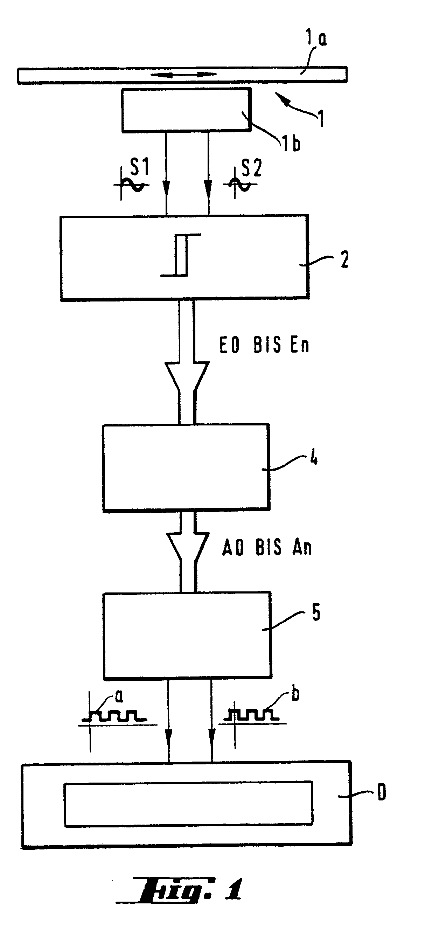

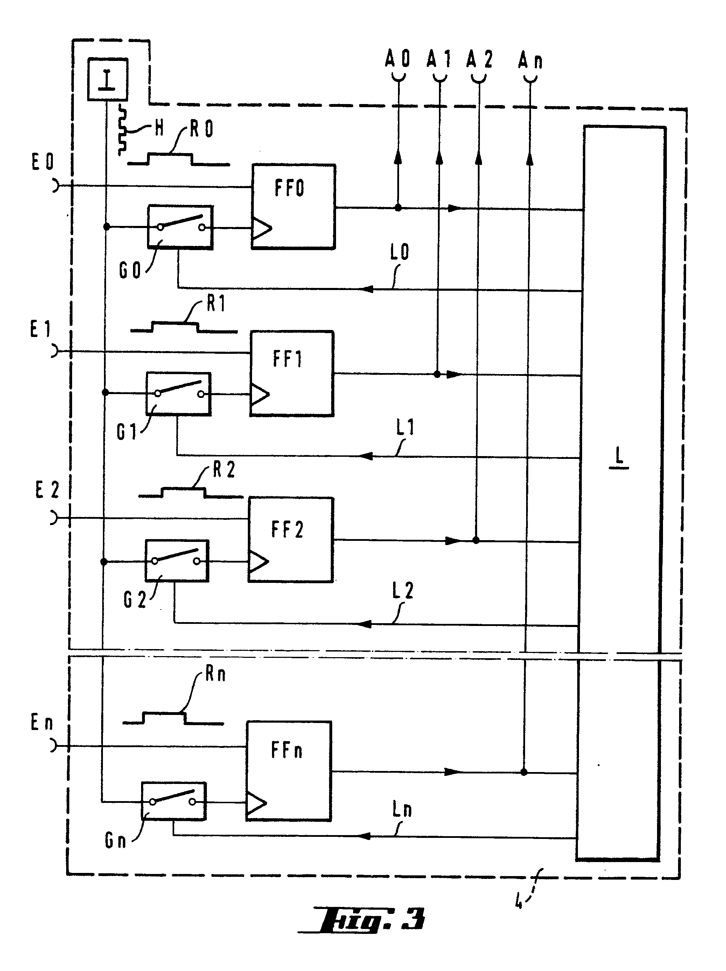

Das in Figur 1 gezeigte System-Schaltbild zeigt eine inkrementale Meßeinrichtung 1, bestehend aus einem Meßteilungsträger 1a, der von einer Abtastbaueinheit 1b bei Relativbewegungen abgetastet wird. Durch die Abtastung werden zwei um 90° zueinander versetzte, analoge Meßsignale S1 und S2 erzeugt, die etwa sinusförmig sind. Die Meßsignale S1 und S2 werden einer Triggereinrichtung 2 zugeführt, wo sie durch eine Anzahl von Triggerstufen unterteilt und in eine Folge von Rechtecksignalen R0 bis Rn (s. Fig.3) umgewandelt werden.

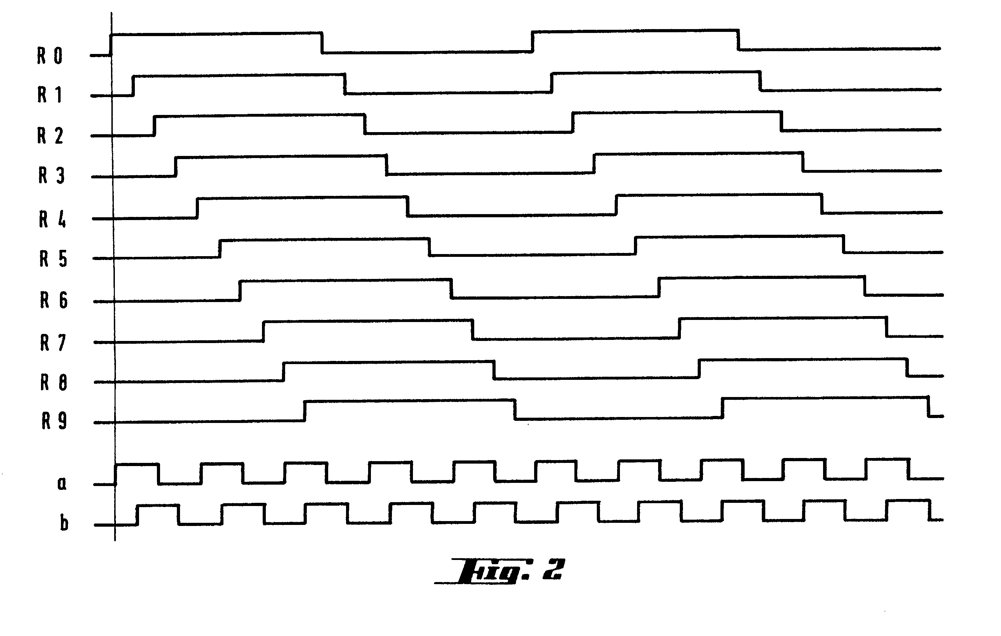

Ein entsprechendes Signaldiagramm zeigt in Figur 2 Rechtecksignalfolgen R0 bis R9, die durch Triggerung im Abstand von 18° gewonnen wurden, was einer fünffachen Unterteilung entspricht. Da bei der Triggerung sowohl das "0°"-Meßsignal S1 als auch das "90°"-Meßsignal S2 ausgewertet wird, benötigt man für eine Verfünffachung zehn Triggerstufen, was zu zehn Rechtecksignalen R0 bis R9 führt, die im Idealfall um 18° versetzt aufeinander folgen. Wenn beispielsweise die Auflösung verzehnfacht werden soll, werden die Meßsignale S1 und S2 im Abstand von 9° getriggert.

Wäre die Abfolge der Rechtecksignale R0 bis Rn ungestört, könnte nach der Zusammenfassung der Rechtecksignale R0 bis R9 in der Verknüpfungsschaltung 5 die Auswerteeinrichtung D die Meßwerte richtig verarbeiten und anzeigen.

Bei zunehmendem Unterteilungsgrad kommt es jedoch in der Praxis immer wieder zu den eingangs erwähnten Störungen, so daß mit Hilfe des erfindungsgemäßen Verfahrens und dazu geeigneten Schaltungen die richtige Abfolge der getriggerten Rechtecksignale R0 bis Rn erzwungen wird. Dies geschieht in der Synchronisierungs-Baueinheit 4, wie nachfolgend anhand der Figur 3 beschrieben wird.

Das in Figur 3 dargestellte, abstrahierte Blockschaltbild stellt die Synchronisierungs-Baueinheit 4 dar und zeigt einen Taktgenerator T, der jeweils an Takteingängen von bistabilen Kippstufen FF0 bis FFn über Schaltmittel G0 bis Gn angeschlossen ist. Die Kippstufen FF0 bis FFn weisen außer ihren Takteingängen noch jeweils einen Dateneingang E0 bis En auf. Die Datenausgänge der einzelnen Kippstufen FF0 bis FFn verzweigen sich, indem sie zum einen Ausgänge A0 bis An bilden und zum anderen in ein Schaltnetz L münden, das nach Art eines kombinatorischen Netzwerkes ausgebildet ist.

Die an den Eingängen des Schaltnetzes L anstehende Kombination der Signalzustände ist maßgebend für die Kombination der Signalzustände an den Ausgängen L0 bis Ln des Schaltnetzes L. Die Ausgänge des Schaltnetzes L bilden Leitungen L0 bis Ln, die zu den Schaltmitteln G0 bis Gn führen.

Der Taktgenerator T liefert ein Hilfssignal H mit einem bestimmten Systemtakt, das in Abhängigkeit von den Signalzuständen an den Ausgängen L0 bis Ln des Schaltnetzes L von den Schaltmitteln G0 bis Gn freigegeben und dem jeweiligen Takteingang der entsprechenden Kippstufe FF0 bis FFn zugeführt wird.

In allgemeiner Form bedeutet das, daß der Eingangszustand einer Kippstufe FFi auf deren Ausgang durchgeschaltet wird, falls der Takteingang der jeweiligen Kippstufe FFi von den Ausgangszuständen der benachbarten Kippstufen FFi-1, FFi+1 freigegeben ist.

Durch die Synchronisierung mit dem Systemtakt und die Freigabe-Logik wird erreicht, daß in jeder Periode des Systemtakts nur ein Ausgang seinen Zustand ändern kann und daß in gewissen Grenzen unabhängig von den Zustandsänderungen der Eingänge die korrekte Schaltreihenfolge der Ausgänge erzwungen wird.

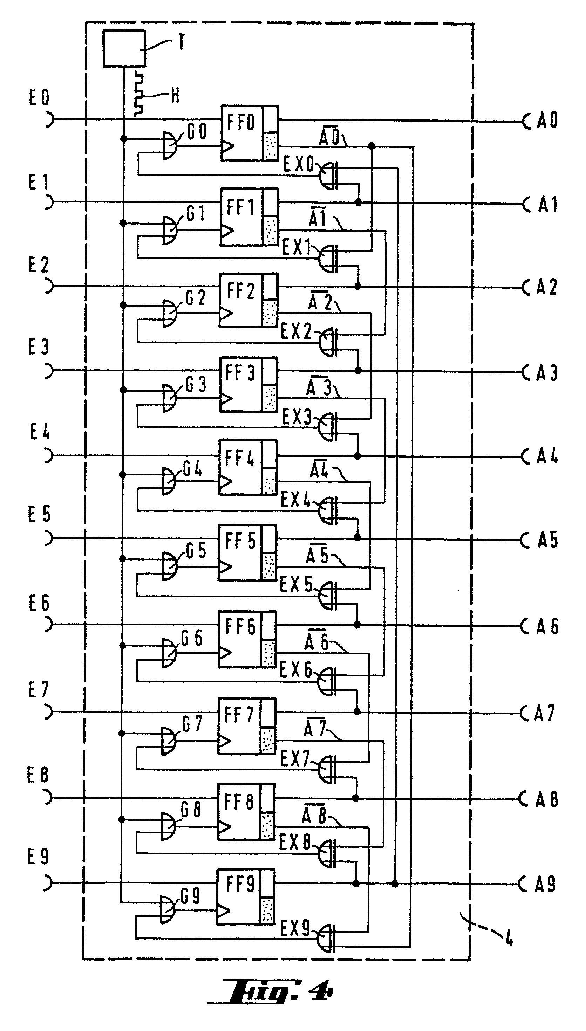

Realisieren läßt sich eine derartige Schaltung zur Durchführung des erfindungsgemäßen Verfahrens besonders vorteilhaft durch einen Aufbau der Synchronisierungs-Baueinheit 4 gemäß Figur 4.

Die bereits in Figur 2 vorgestellten getriggerten Rechtecksignale R0 bis R9 liegen jeweils an Dateneingängen E0 bis E9 von bistabilen Kippstufen FF0 bis FF9. Der ebenfalls bereits vorgestellte Taktgenerator T speist die Takteingänge der jeweiligen Kippstufen FF0 bis FF9 mit einem Hilfssignal H, wobei zwischen den Taktgenerator T und die einzelnen Takteingänge jeweils ein logisches Element in Form eines Oder-Gatters G0 bis G9 geschaltet ist. Die Oder-Gatter G0 bis G9 dienen zur Steuerung der Takteingänge der einzelnen Kippstufen FF0 bis FF9.

Die durch die Synchronisierungs-Baueinheit 4 synchronisierten Rechtecksignale liegen an Ausgängen A0 bis A9 der bistabilen Kippstufen FF0 bis FF9. Für die Synchronisierung des ersten und des letzten Rechtecksignals gelten besondere Verknüpfungsbedingungen, die später erläutert werden.

An jeweils einem Eingang der Oder-Gatter G1 bis G9 liegt, wie bereits beschrieben, das getaktete Hilfssignal H des Taktgenerators T an, so daß die Aktivierung der bistabilen Kippstufen FF1 bis FF9 durch ihre Oder-Gatter G1 bis G9 an ihren Takteingängen gesteuert wird.

Das Steuerverhalten des jeweiligen Oder-Gatters G1 bis G9 hängt jedoch wiederum vom getakteten Hilfssignal H ab und vom Signalzustand am Ausgang des zugehörigen Exclusiv-Oder-Gatters EX1 bis EX9.

Die Signalzustände an den Ausgängen der Exclusiv-Oder-Gatter EX0 bis EX9 sind jeweils abhängig von den Zuständen der Signale an ihrem Eingang. Am Eingang der Exclusiv-Oder-Gatter EX1 bis EX8 liegen jeweils das invertierte Ausgangssignal $\overline{Ai-1}$ der vorhergehenden Kippstufe FFi-1 und das nicht invertierte Ausgangssignal Ai+1 der nachfolgenden Kippstufe FFi+1 an.

Zur Verdeutlichung soll das Schaltverhalten einer der genannten Kippstufen FFi genau erläutert werden:

Am Dateneingang E4 der Kippstufe FF4 liegt das Rechtecksignal R4 an. Das Signal am Eingang E4 wird auf den Ausgang A4 der Kippstufe FF4 durchgeschaltet, wenn eine Schaltflanke des vom Taktgenerator T gelieferten Hilfssignales H am Takteingang der Kippstufe FF4 anliegt. Allerdings liegt eine Schaltflanke des Hilfssignales H nur am Takteingang der Kippstufe FF4 an, wenn das Hilfssignal H das eingangsseitige Oder-Gatter G4 passieren kann. Dazu ist es erforderlich, daß der mit dem Exclusiv-Oder-Gatter EX4 verbundene Eingang des Oder-Gatters G4 den logischen Zustand "0" hat.

An einem der Eingänge des Oder-Gatters G4 liegt also das Hilfssignal H des Taktgenerators T an, der zweite Eingang des Oder-Gatters G4 ist mit dem Ausgang des Exclusiv-Oder-Gatters EX4 verbunden. An einem der Eingänge des Exclusiv-Oder-Gatters EX4 liegt der invertierte Ausgang $\overline{A3}$ der vorhergehenden Kippstufe FF3 an, am anderen Eingang des Exclusiv-Oder-Gatters EX4 liegt der nichtinvertierte Ausgang A5 der nachfolgenden Kippstufe FF5 an.

Damit nun das Hilfssignal H des Taktgenerators T das am Dateneingang E4 der Kippstufe FF4 anliegende Rechtecksignal R4 auf den Ausgang A4 der Kippstufe FF4 durchschalten kann, müssen die Eingänge des Exclusiv-Oder-Gatters EX4 beide den gleichen logischen Zustand haben, d.h., beide müssen logisch "0" oder logisch "1" sein. In diesen Fällen hat der Ausgang des Exclusiv-Oder-Gatters EX4 den logischen Zustand "O", damit kann das Hilfssignal H des Taktgenerators T das Oder-Gatter G4 passieren und die Kippstufe FF4 übernimmt mit einer Schaltflanke des Hilfssignals H des Taktgenerators T das am Dateneingang E4 anstehende Rechtecksignal R4 auf den Ausgang A4.

Auf diese Weise ist die Freigabe einer Änderung des Zustandes eines Ausgangssignals einer Kippstufe von den Signalzuständen der benachbarten synchronisierten Rechtecksignale an den Ausgängen Ai-1 und Ai+1 ihrer zugehörigen bistabilen Kippstufen FFi-1 und FFi+1 sowie vom Takt des Hilfssignales H abhängig und somit synchronisiert.

Um bei der Synchronisierung von Rechtecksignalen den sicheren Übergang von einer Signalperiode des unterteilten analogen Meßsignals zur nächsten (s.Fig.2) zu gewährleisten, müssen die erste und die letzte Kippstufe FF0 und FF9 geringfügig anders über ihre zugehörigen Exclusiv-Oder-Gatter EX0 und EX9 zusammengeschaltet werden, da sie ja jeweils nur über eine Nachbarkippstufe FF1 bzw. FF8 verfügen. Aus Figur 4 ist leicht erkennbar, daß in diesem Fall das Exclusiv-Oder-Gatter EX0 der ersten Kippstufe FF0 vom nichtinvertierten Ausgang A1 der Kippstufe FF1 und vom nichtinvertierten Ausgang A9 der letzten Kippstufe FF9 beaufschlagt wird. Dementsprechend wird das Exclusiv-Oder-Gatter EX9 der letzten Kippstufe FF9 mit dem invertierten Ausgang $\overline{A8}$ der vorhergehenden Kippstufe FF8 und mit dem invertierten Ausgang $\overline{A0}$ der ersten Kippstufe FF0 beaufschlagt.

Die auf diese Weise synchronisierten Rechtecksignale R0 bis R9 werden über die Ausgänge A0 bis A9 der Synchronisierungs-Baueinheit 4 einer Verknüpfungsschaltung 5 zugeführt, von der aus sie in die Auswerteeinrichtung D eingespeist und als gezählter Meßwert angezeigt werden (siehe Figur 1). Die in der Verknüpfungsschaltung 5 zusammengefaßten Rechtecksignale R0 bis R9 sind in Figur 2 als Rechtecksignale a und b angedeutet.

Es versteht sich, daß das erfindungsgemäße Verfahren zur Synchronisierung von Rechtecksignalen nicht auf Längenmeßeinrichtungen beschränkt ist, und daß der Fachmann nach den Regeln der Boolschen Algebra auch zur Realisierung der Erfindung andere logische Verknüpfungselemente vorsehen kann.

## Patentansprüche

1. Verfahren zur Synchronisierung von Rechtecksignalen mit Hilfe eines Schaltwerkes, bei dem die Rechtecksignale vorzugsweise aus wenigstens einem durch Abtastung einer inkrementalen Meßteilung gewonnenen periodischen Analogsignal durch Unterteilung und Triggerung erzeugt und einer Anzahl bistabiler Kippstufen zugeführt werden, dadurch gekennzeichnet, daß die Abfolge der Rechtecksignale (R0 bis Rn) durch wenigstens ein periodisches Hilfssignal (H) getaktet wird, welches die - der Anzahl der Rechtecksignale (R0 bis Rn) entsprechende - Anzahl von bistabilen Kippstufen (FF0 bis FFn) beaufschlagt, und daß die Freigabe einer Änderung des Signalzustandes am Ausgang (Ai) einer der bistabilen Kippstufen (FFi) von den Signalzuständen an den Ausgängen (Ai-1 und Ai+1) der benachbarten bistabilen Kippstufen (FFi-1 und FFi+1) und vom Takt des Hilfssignales (H) abhängig ist.

2. Schaltungsanordnung zur Durchführung des Verfahrens nach Anspruch 1, dadurch gekennzeichnet, daß jeweils ein Rechtecksignal (R0 bis Rn) an dem einen Eingang einer zugehörigen Kippstufe (FF0 bis FFn) anliegt, daß für die Takteingänge der einzelnen Kippstufen (FF0 bis FFn) wenigstens ein ein Hilfssignal herstellender Taktgenerator (T) vorgesehen ist, daß an einem zweiten Eingang der einzelnen Kippstufen (FF0 bis FFn) Schaltmittel (G0 bis Gn) vorgesehen sind, die vom Hilfssignal gespeist und von einem kombinatorischen Netzwerk (L) angesteuert werden, dessen Eingänge von den Ausgängen (A0 bis An) der einzelnen Kippstufen (FF0 bis FFn) gebildet werden, und daß die Steuersignale für die Ansteuerung der Schaltmittel (G0 bis Gn) von der Zustandskombination der Signale an den Eingängen des kombinatorischen Netzwerkes (L) abhängig sind.

3. Schaltungsanordnung nach Anspruch 2, dadurch gekennzeichnet, daß jeweils ein Rechtecksignal (Ri) am Dateneingang einer zugehörigen Kippstufe (FFi) anliegt, daß für die Takteingänge der einzelnen Kippstufen (FF0 bis FFn) ein gemeinsamer Taktgenerator (T) vorgesehen ist und daß jeweils zwischen den Taktgenerator (T) und die einzelnen Kippstufen (FF0 bis FFn) Schaltmittel (G0 bis Gn) geschaltet sind, die über Ausgangsleitungen (L0 bis Ln) von einem kombinatorischen Netzwerk (L) angesteuert werden.

4. Schaltungsanordnung nach den Ansprüchen 2 und 3, dadurch gekennzeichnet, daß die Schaltmittel (G0 bis Gn) von Oder-Gattern gebildet werden.

5. Schaltungsanordnung nach den Ansprüchen 2, 3 und 4, dadurch gekennzeichnet, daß das kombinatorische Netzwerk (L) ein Schaltnetz mit einer der Anzahl der Kippstufen (FF0 bis FFn) entsprechenden Anzahl von Exclusiv-Oder-Gattern (EX0 bis EXn) ist, deren Ausgänge jeweils an einem Eingang ihres zugehörigen Oder-Gatters (G0 bis Gn) liegen.

6. Schaltungsanordnung nach Anspruch 5, dadurch gekennzeichnet, daß jeweils an einem der Eingänge eines Exclusiv-Oder-Gatters (EXi) der invertierte Ausgang $(\overline{Ai-1})$ der vorhergehenden Kippstufe (FFi-1) und am anderen Eingang des Exclusiv-Oder-Gatters (EXi) der nichtinvertierte Ausgang (Ai + 1) der nachfolgenden Kippstufe (FFi + 1) angeschlossen ist.

**Claims**

1. Method for synchronizing squarewaves with the aid of a circuit in which the squarewaves are formed by division and triggering preferably from at least one analog signal derived by sensing an incremental measuring graduation and are applied to a number of bistable flip-flop stages, characterized in that the sequence of the squarewaves (R0 to Rn) is clocked by at least periodic auxiliary signal (H), which acts on the number - corresponding to the number of the squarewaves (R0 to Rn) - of bistable flip-flop stages (FF0 to FFn), and in that the release of a change of the signal state at the output (Ai) of one of the bistable flip-flop stages (FFi) is dependent on the signal states at the outputs (Ai-1 and Ai + 1) of the adjacent bistable flip-flop stages (FFi-1 and FFi + 1) and on the clock of the auxiliary signal (H).

2. Circuit arrangement for carrying out the method according to claim 1, characterized in that each squarewave (R0 to Rn) is applied to the one input of an associated flip-flop stage (FF0 to FFn), in that at least one clock generator (T) generating an auxiliary signal is provided for the clock inputs of the individual flip-flop stages (FF0 to FFn), in that switching means (G0 to Gn) are provided at a second input of the individual flip-flop stages (FF0 to FFn), which are fed by the auxiliary signal and controlled by a combinatorial network (L) whose inputs are formed from the outputs (A0 to An) of the individual flip-flop stages (FF0 to FFn), and in that the control signals for the control of the switching means (G0 to Gn) are dependent on the state combinations of the signals at the inputs of the combinatorial network (L).

3. Circuit arrangement according to claim 2, characterized in that each squarewave (Ri) is applied to the data input of an associated flip-flop stage (FFi), in that a common clock generator (T) is provided for the clock inputs of the individual flip-flop stages (FF0 to FFn) and in that the switching means (G0 to Gn) are connected between the common clock generator (T) and the respective individual flip-flop stages (FF0 to FFn) and are controlled by output lines (L0 to Ln) from a combinatorial network (L).

4. Circuit arrangement according to claims 2 and 3, characterized in that the switching means (G0 to Gn) are formed from OR gates.

5. Circuit arrangement according to claims 2, 3 and 4, characterized in that the combinatorial network (L) is a circuit network with a number of exclusive OR gates (EX0 to EXn) corresponding to the number of flip-flop stages (FF0 to FFn), the outputs of which gates are applied in each case to an input or their associated OR gate (G0 to Gn).

6. Circuit arrangement according to claim 5, characterized in that the inverted output (Ai-1) of the preceding flip-flop stage (FFi-1) is connected to one or the inputs of an exclusive OR gate (EXi) in cash case and the non-inverted output (Ai + 1) of the following flip-flop stage (FFi + 1) is connected to the other input of the exclusive OR gate (EXi).

**Revendications**

1. Procédé pour la synchronisation de signaux carrés à l'aide d'un dispositif de commutation, dans lequel les signaux carrés sont produits par division et déclenchement à partir d'au moins un signal analogique périodique obtenu par lecture d'une graduation de mesure incrémentale et sont envoyés dans un certain nombre de bascules bistables, **caractérisé** en ce que la succession des signaux carrés (R0 à Rn) est cadencée par au moins un signal auxiliaire périodique (H), qui est appliqué à la quantité de bascules bistables (FF0 à FFn) - qui correspond à la quantité des signaux carrés (R0 à Rn), et en ce que la validation d'une modification de l'état du signal à la sortie (Ai) d'une des bascules bistables (FFi) dépend des états de signaux des sorties (Ai-1 et Ai + 1) des bascules bistables voisines (FFi-1 et FFi + 1) et de la cadence du signal auxiliaire (H).

2. Circuit pour la mise en oeuvre du procédé selon la revendication 1, **caractérisé** en ce qu'un signal carré (R0 à Rn) est appliqué à l'entrée d'une bascule (FF0 à FFn), en ce qu'au moins un générateur d'impulsion (T) produisant un signal auxiliaire est prévu pour les entrées de synchronisation des différentes bascules (FF0 à FFn),en ce que des moyens de commutation (G0 à Gn) sont prévus à une deuxième entrée des différentes bascules (FF0 à FFn), moyens de commutation qui sont alimentés par le signal auxiliaire et sont commandés par un circuit combinatoire (L), et dont les entrées sont formées par les sorties (A0 à An) des différentes bascules (FF0 à FFn), et en ce que les signaux de commande pour la commande des moyens de commutation (G0 à Gn) dépendent de la combinaison des états des signaux aux entrées du réseau combinatoire (L).

3. Circuit selon la revendication 2, **caractérisé** en ce qu'un signal carré (Ri) est appliqué à l'entrée de données d'une bascule correspondante (FFi), en ce qu'un générateur d'impulsions (T) commun est prévu pour les entrées de synchronisation des différentes bascules (FF0 à FFn), et en ce que, entre le générateur d'impulsions (T) et les différentes bascules (FF0 à FFn), des moyens de commutation (G0 à Gn) sont prévus qui sont commandés par l'intermédiaire de lignes de sortie (L0 à Ln) par un réseau combinatoire (L).

4. Circuit selon les revendications 2 et 3, **caractérisé** en ce que les moyens de commutation (G0 à Gn) sont formés par des portes OU.

5. Circuit selon les revendications 2, 3 et 4, **caractérisé** en ce que le réseau combinatoire (L) est un réseau avec un nombre de portes OU-exclusif (EX0 à EXn) correspondant au nombre de bascules (FF0 à FFn), dont les sorties sont reliées chacune à une entrée de la porte OU (G0 à Gn) correspondante.

6. Circuit selon la revendication 5, **caractérisé** en ce qu'une des entrées d'une porte OU-exclusif (EXi) est reliée à la sortie inversée ($\overline{Ai-1}$) de la bascule précédente (FFi-1) et l'autre entrée de la porte OU-exclusif (Exi) est reliée à la sortie non-inversée (Ai + 1) de la bascule suivante (FFi + 1).

**Fig. 1**

Fig. 2

R0 R1 R2 R3 R4 R5 R6 R7 R8 R9 a b

**Fig. 3**

Fig. 4